# FASCICULE DE BREVET EUROPEEN

(11) **EP 3 877 201 B1**
(45) Date de publication et mention de la délivrance du brevet: **12.07.2023**
(21) Numéro de dépôt: 19832164.8
(22) Date de dépôt: 30.10.2019
(51) Int. Cl.: B60C 15/00, B60C 15/024, B60C 9/02, B60C 15/06

(54) **PNEUMATIQUE DONT LA ZONE DU BOURRELET EST ALLÉGÉE**
REIFEN MIT GEWICHTSREDUZIERTEM WULSTBEREICH
TYRE HAVING A REDUCED WEIGHT BEAD REGION

(30) Priorité: 09.11.2018 FR 1860373
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: MANSUY, Philippe, 63040 CLERMONT-FERRAND Cedex 9 (FR); BESTGEN, Luc, 63040 CLERMONT-FERRAND Cedex 9 (FR); JOULIN, Emmanuel, 63040 CLERMONT-FERRAND Cedex 9 (FR)
(74) Mandataire: Le Cam, Stéphane Georges Elie
(86) Numéro de dépôt international: PCT/FR2019/052585
(87) Numéro de publication internationale: WO 2020/094952

(56) Documents cités:
- FR-A1- 2 901 178
- FR-A1- 2 953 764
- FR-A1- 3 050 962

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les j antes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

Dans ses demandes FR 3 050 962 et WO2018/011510, la demanderesse a déjà proposé des pneumatiques pour véhicules "Poids-Lourds", dont les performances d'endurance notamment l'endurance des zones des bourrelets sont conservées et dont la conception est simplifiée et avantageusement dont la masse globale du pneumatique est diminuée.

Les pneumatiques selon cette conception comportent notamment une couche d'armature de carcasse dont le retournement présente une longueur supérieure aux conceptions plus usuelles celui-ci étant couplé avec la partie principale de la couche d'armature de carcasse et se caractérise notamment par l'absence de raidisseur.

Si ces pneumatiques sont satisfaisants dans des conditions d'utilisation et de roulage normales, les inventeurs ont fait apparaître que des risques de moindre performance en termes d'endurance pouvaient apparaître dans le cas de roulage dans des conditions extrêmes notamment en termes de charges transportées ou de pression de gonflage.

Par ailleurs, le document FR 2 901 178 décrit un pneumatique comportant un renfort bi-élastique couvrant l'extrémité du retournement de l'armature carcasse.

Les inventeurs se sont ainsi donnés pour mission de réaliser des pneumatiques dont la conception est simplifiée et avantageusement dont la masse globale du pneumatique est diminuée en assurant des performances en termes d'endurance quelles que soient les conditions de roulage y compris lorsque l'usage se fait dans des conditions de extrêmes notamment en termes de charges transportées ou de pression de gonflage.

Ce but a été atteint selon l'invention par un pneumatique destiné à être monté sur une jante creuse de type 15 ° drop centre, comprenant une armature de carcasse radiale, constituée d'une unique couche d'armature de carcasse formée d'éléments de renforcement insérés entre deux couches de calandrage de mélange polymérique, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement de la couche d'armature de carcasse étant séparé de la partie principale de la couche d'armature de carcasse par une première couche de mélange polymérique s'étendant radialement depuis la tringle axialement entre la partie principale de la couche d'armature de carcasse et le retournement de la couche d'armature de carcasse et ledit retournement de la couche d'armature de carcasse étant axialement vers l'extérieur au contact d'une deuxième couche de mélange polymérique, elle-même au moins au contact d'une troisième couche de mélange polymérique formant la surface extérieure du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche de mélange polymérique formant la surface extérieure d'un flanc, et conformément à l'invention, dans une coupe méridienne dudit pneumatique,
- au moins une couche d'éléments de renforcement textiles orientés radialement est axialement au contact de l'extrémité du retournement de la couche d'armature de carcasse,
- ladite au moins une couche d'éléments de renforcement textiles s'étend radialement intérieurement au contact du retournement de la couche d'armature de carcasse sur au moins 8 mm,
- ladite au moins une couche d'éléments de renforcement textiles s'étend radialement extérieurement au-delà de l'extrémité du retournement de la couche d'armature de carcasse sur au moins 8 mm,
- la distance entre l'extrémité du retournement de la couche d'armature de carcasse et le point radialement le plus intérieur du cercle circonscrit à la tringle est comprise entre 45 et 90% de la distance entre le point axialement le plus extérieur de la partie principale de la couche d'armature de carcasse et le point radialement le plus intérieur du cercle circonscrit à la tringle,
- radialement vers l'extérieur à partir d'un point C du retournement de la couche d'armature de carcasse situé à une distance du point radialement le plus intérieur du cercle circonscrit à la tringle comprise entre 30 et 55% de la distance entre l'extrémité du retournement de la couche d'armature de carcasse et le point radialement le plus intérieur du cercle circonscrit à la tringle, le retournement de la couche d'armature de carcasse et la partie principale de la couche d'armature de carcasse sont couplés, et
- le retournement de la couche d'armature de carcasse et la partie principale de la couche d'armature de carcasse sont les seules couches d'éléments de renforcement dont l'allongement à rupture est inférieur à 6 % présentes dans une zone du flanc constituant au moins 90% de la surface du flanc comprise radialement entre l'extrémité du retournement de la couche d'armature de carcasse et le point radialement le plus extérieur du cercle circonscrit à la tringle.

Au sens de l'invention, une jante creuse de type 15° drop center ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jante à bases plates dont les sièges de jante présentent des formes sensiblement cylindriques.

Au sens de l'invention, des éléments de renforcement orientés radialement signifie que les éléments de renforcement sont dans un plan formant un angle avec un plan radial inférieur ou égal à 10°, les deux plans étant sécants selon un axe perpendiculaire à l'axe de rotation.

La position du point axialement le plus extérieur de la partie principale de l'armature de carcasse est déterminée sur un pneumatique monté et gonflé selon les conditions nominales. Cette détermination peut être réalisée par exemple selon une technique de tomographie.

Les positions des points radialement le plus intérieur et radialement le plus extérieur du cercle circonscrit à la tringle peuvent également être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

La distance entre le point axialement le plus extérieur de la partie principale de la couche d'armature de carcasse et le point radialement le plus intérieur du cercle circonscrit à la tringle est mesurée sur un pneumatique monté et gonflé selon les conditions nominales. Cette mesure peut être réalisée par exemple selon une technique de tomographie.

Les autres distances, notamment mesurées depuis le point radialement le plus intérieur du cercle circonscrit à la tringle, peuvent également être mesurées selon une technique de tomographie ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

Au sens de l'invention, la partie principale de la couche d'armature de carcasse et le retournement de la couche d'armature de carcasse sont dits couplés si les éléments de renforcement respectifs de la partie principale de la couche d'armature de carcasse et du retournement de la couche d'armature de carcasse sont séparés par une épaisseur de mélange caoutchouteux sensiblement constante et d'au plus 5 mm sur une longueur supérieure à 15 % de la distance entre l'extrémité du retournement de la couche d'armature de carcasse et le point radialement le plus intérieur du cercle circonscrit à la tringle. L'épaisseur de mélange caoutchouteux séparant les éléments de renforcement respectifs de la partie principale de la couche d'armature de carcasse et du retournement de la couche d'armature de carcasse est mesurée selon la direction normale aux éléments de renforcement de la partie principale de la couche d'armature de carcasse. Avantageusement selon l'invention, les éléments de renforcement respectifs de la partie principale de la couche d'armature de carcasse et du retournement de la couche d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la partie principale de la couche d'armature de carcasse et du retournement de la couche d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Avantageusement selon l'invention, l'armature de sommet comportant au moins une couche d'éléments de renforcement, le ratio de la distance radiale entre le point axialement le plus extérieur de la partie principale de la couche d'armature de carcasse et le point radialement le plus extérieur de la jante nominale, c'est-à-dire le point radialement le plus extérieur du crochet de jante, sur la distance radiale entre l'extrémité axialement extérieure de la couche d'éléments de renforcement de l'armature sommet axialement la plus large et le point radialement le plus extérieur de la jante nominale est inférieur ou égal à 55 %.

La distance radiale entre le point axialement le plus extérieur de la partie principale de la couche d'armature de carcasse et le point radialement le plus extérieur de la jante nominale est mesurée sur un pneumatique monté et gonflé selon les conditions nominales. Cette mesure peut être réalisée par exemple selon une technique de tomographie.

La distance radiale entre l'extrémité axialement extérieure de la couche d'éléments de renforcement de l'armature sommet axialement la plus large et le point radialement le plus extérieur de la jante nominale peut également être mesurée selon une technique de tomographie, le pneumatique étant monté et gonflé selon les conditions nominales.

De préférence encore selon l'invention, le ratio de la distance radiale entre le point axialement le plus extérieur de la partie principale de la couche d'armature de carcasse et le point radialement le plus extérieur de la jante nominale sur la distance radiale entre l'extrémité axialement extérieure de la couche d'éléments de renforcement de l'armature sommet axialement la plus large et le point radialement le plus extérieur de la jante nominale est inférieur à 53 %.

Les essais ont montré que les pneumatiques ainsi réalisés selon l'invention combinent une masse réduite, notamment en comparaison de pneumatiques de conception plus usuelle, comportant par exemple des couches d'éléments de renforcement supplémentaires de type raidisseurs, et des performances en termes d'endurance, et notamment en termes d'endurance des zones des bourrelets, au moins aussi bonnes que celles desdits pneumatiques de conception plus usuelle, voire supérieures, quelles que soient les conditions d'utilisation notamment lors de roulages dans des conditions particulièrement sévères en termes de charges transportées ou bien de pression de gonflage.

Les inventeurs pensent avoir mis en évidence que ladite au moins une couche d'éléments de renforcement textiles orientés radialement, son positionnement et son dimensionnement, sont favorables à une diminution de l'initiation des fissures. En effet, cette couche d'éléments de renforcement textiles semble permettre de limiter l'ouverture des fissures qui s'initient dans les mélanges polymériques au niveau de l'extrémité du retournement de la couche d'armature de carcasse.

Les inventeurs ont ainsi su mettre en évidence que les pneumatiques réalisés conformément à l'invention et qui présentent notamment un retournement de la couche d'armature de carcasse avec une longueur supérieure à certaines conceptions plus usuelles, un couplage du retournement de la couche d'armature de carcasse avec la partie principale de la couche d'armature de carcasse, associés aux dimensionnements et positionnement relatifs des différents éléments constitutifs de la zone du bourrelet du pneumatique, permettent d'alléger le pneumatique et contre toute attente de conserver des propriétés en termes d'endurance satisfaisantes, voire de les améliorer, quelles que soient les conditions d'utilisation et notamment lors de roulage dans des conditions extrêmes en termes de charges transportées ou de pression de gonflage.

Selon une première variante de réalisation de l'invention, dans sa partie axialement au contact du retournement de la couche d'armature de carcasse, ladite au moins une couche d'éléments de renforcement textiles est axialement intérieure au retournement de la couche d'armature de carcasse.

Selon cette première variante de réalisation de l'invention, l'extrémité radialement la plus extérieure de la première couche de mélange polymérique au contact de du retournement de la couche d'armature de carcasse est radialement intérieure à l'extrémité du retournement de la couche d'armature de carcasse.

Selon une deuxième variante de réalisation de l'invention, dans sa partie axialement au contact du retournement de la couche d'armature de carcasse, ladite au moins une couche d'éléments de renforcement textiles est axialement extérieure au retournement de la couche d'armature de carcasse.

Selon cette deuxième variante de réalisation de l'invention, ladite au moins une couche d'éléments de renforcement textiles sépare l'extrémité du retournement de la couche d'armature de carcasse de la quatrième couche de mélange polymérique et/ou de la deuxième couche de mélange polymérique.

Selon une troisième variante de réalisation de l'invention, le pneumatique comporte deux couches d'éléments de renforcement textiles, une première couche d'éléments de renforcement textiles axialement extérieure au retournement de la couche d'armature de carcasse dans sa partie axialement au contact du retournement de la couche d'armature de carcasse et une deuxième couche d'éléments de renforcement textiles axialement intérieure au retournement de la couche d'armature de carcasse dans sa partie axialement au contact du retournement de la couche d'armature de carcasse.

Avantageusement selon l'invention, le diamètre des éléments de renforcement textiles de ladite au moins une couche d'éléments de renforcement textiles est inférieur à 0.65 mm et de préférence inférieur à 0.50 mm.

Un tel choix de diamètre des éléments de renforcement textiles permet d'éviter le risque de récréer des extrémités susceptibles d'être la source de l'initiation de fissures dans les mélanges polymériques environnants.

Avantageusement encore selon l'invention, la densité d'éléments de renforcement textiles de ladite au moins une couche d'éléments de renforcement textiles est comprise entre 33 et 104 éléments de renforcement textiles par décimètre et de préférence inférieure à 50 éléments de renforcement textiles par décimètre.

Le choix d'une telle densité d'éléments de renforcement permet avantageusement de favoriser la cohésion de la dite au moins une couche d'éléments de renforcement textiles avec les couches de mélange polymériques environnantes. Ce choix permet encore avantageusement de faciliter la soudure de la dite au moins une couche d'éléments de renforcement textiles lors de la fabrication du pneumatique.

Selon un mode de réalisation de l'invention, l'extrémité radialement la plus extérieure de la première couche de mélange polymérique est radialement extérieure à l'extrémité du retournement de la couche d'éléments de renforcement textiles.

Selon un autre mode de réalisation de l'invention, l'extrémité radialement la plus extérieure de la première couche de mélange polymérique au contact de la partie principale de la couche d'armature de carcasse est radialement intérieure à l'extrémité du retournement de la couche d'éléments de renforcement textiles. La première couche de mélange polymérique est alors prolongée radialement vers l'extérieur par une cinquième couche de mélange polymérique constituée d'une ou plusieurs parties et présentant des propriétés physico-chimiques différentes de celles de la première couche de mélange polymérique.

Selon un mode de réalisation préféré de l'invention, le module d'élasticité sous tension à 10 % d'allongement de la deuxième couche de mélange polymérique est supérieur ou égal au module d'élasticité sous tension à 10 % d'allongement du calandrage de la couche d'armature de carcasse et strictement inférieur à 25 MPa.

Un tel mode de réalisation de l'invention contribue encore aux performances en termes d'endurance alors que selon des configurations de pneumatique plus usuelles, la deuxième couche de mélange polymérique positionnée axialement à l'extérieur et au contact du retournement de la couche d'armature de carcasse présente un module d'élasticité sous tension à 10 % d'allongement inférieur à celui des couches de calandrage de l'armature de carcasse, notamment pour limiter les montées en température dans la zone du bourrelet du pneumatique

Avantageusement selon l'invention, l'extrémité du retournement de la couche d'armature de carcasse est radialement extérieure à l'extrémité radialement extérieure de la deuxième couche de mélange polymérique,

Avantageusement encore selon l'invention, l'extrémité radialement extérieure de la deuxième couche de mélange polymérique est radialement extérieure à l'extrémité radialement extérieure de la troisième couche de mélange polymérique

Avantageusement également selon l'invention, l'extrémité radialement intérieure de la deuxième couche de mélange polymérique est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance du pneumatique et ses performances en termes de résistance au roulement.

Selon un mode de réalisation avantageux de l'invention, le module d'élasticité sous tension à 10 % d'allongement des couches de calandrage de ladite au moins une couche d'éléments de renforcement textiles est compris entre 80 % et 110 % du module d'élasticité sous tension à 10 % d'allongement du calandrage de la couche d'armature de carcasse. Le choix d'un tel module d'élasticité des couches de calandrage permet de répartir de manière homogène les cisaillements entre le calandrage de ladite au moins une couche d'éléments de renforcement textiles et le calandrage du retournement de la couche d'armature de carcasse, et ainsi de limiter encore les risques de fissuration.

De préférence selon l'invention, le module d'élasticité sous tension à 10 % d'allongement de la première couche de mélange polymérique est inférieur ou égal au module d'élasticité sous tension à 10 % d'allongement du calandrage de la couche d'armature de carcasse. Ce choix permet notamment de concentrer les efforts de cisaillement au sein de la première couche de mélange polymérique.

De préférence encore selon l'invention, le module d'élasticité sous tension à 10 % d'allongement de la première couche de mélange polymérique est supérieur à 50% du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange polymérique tout en assurant de bonnes performances d'endurance.

Selon une réalisation avantageuse de l'invention, lorsque selon une variante de réalisation précédemment décrite, dans sa partie axialement au contact du retournement de la couche d'armature de carcasse, ladite au moins une couche d'éléments de renforcement textiles est axialement intérieure au retournement de la couche d'armature de carcasse, le module d'élasticité sous tension à 10 % d'allongement des couches de calandrage de ladite au moins une couche d'éléments de renforcement textiles est supérieure au module d'élasticité sous tension à 10 % d'allongement de la première couche de mélange polymérique.

Avantageusement selon l'invention, le module d'élasticité sous tension à 10 % d'allongement de la deuxième couche de mélange polymérique est inférieur à 150% du module d'élasticité sous tension à 10 % d'allongement du calandrage de la couche d'armature de carcasse. Selon cette réalisation avantageuse de l'invention, la deuxième couche de mélange polymérique confère suffisamment de rigidité pour assurer une bonne tenue en endurance du pneumatique lors des appuis sur les crochets de jante tout en assurant des performances en termes de résistance au roulement satisfaisantes.

Selon un mode de réalisation préféré de l'invention, pour favoriser le compromis entre les performances d'endurance et de résistance au roulement, le module d'élasticité sous tension à 10 % d'allongement de la première couche de mélange polymérique est supérieur ou égal au module d'élasticité sous tension à 10 % d'allongement de la troisième couche de mélange polymérique qui est lui-même supérieur ou égal au module d'élasticité sous tension à 10 % d'allongement de la quatrième couche de mélange polymérique.

Une variante avantageuse de l'invention prévoit que radialement vers l'extérieur à partir dudit point C du retournement de la couche d'armature de carcasse, le retournement de la couche d'armature de carcasse et la partie principale de la couche d'armature de carcasse sont couplés sur une longueur comprise entre 15 et 65% de la distance entre l'extrémité du retournement de la couche d'armature de carcasse et le point radialement le plus intérieur du cercle circonscrit à la tringle, pour être ensuite découplés par la première couche de mélange polymérique jusqu'à l'extrémité du retournement de la couche d'armature de carcasse.

Au sens de l'invention, la partie principale de la couche d'armature de carcasse et le retournement de la couche d'armature de carcasse sont dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage. Les éléments de renforcement respectifs de la partie principale de la couche d'armature de carcasse et du retournement de la couche d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de la partie principale de la couche d'armature de carcasse entre les éléments de renforcement respectifs de la partie principale de la couche d'armature de carcasse et du retournement de la couche d'armature de carcasse. De préférence selon l'invention, dans la zone de découplage, les éléments de renforcement respectifs de la partie principale de la couche d'armature de carcasse et du retournement de la couche d'armature de carcasse sont séparés d'au plus 6 mm et de préférence ils sont séparés d'au moins 4 mm.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la partie principale de la couche d'armature de carcasse et du retournement de la couche d'armature de carcasse augmente et d'une deuxième partie radialement la plus extérieure dans laquelle l'épaisseur de mélange caoutchouteux séparant les éléments de renforcement respectifs de la partie principale de la couche d'armature de carcasse et du retournement de la couche d'armature de carcasse est sensiblement constante.

Selon cette variante de réalisation de l'invention, l'augmentation de l'épaisseur de la première couche de mélange polymérique et/ou de la cinquième couche de mélange polymérique permet de venir compenser la diminution de la tension dans les éléments de renforcement de l'armature de carcasse lorsque l'on s'approche de l'extrémité de son retournement pour absorber les contraintes de cisaillement entre la partie principale de la couche d'armature de carcasse et son retournement.

Avantageusement encore, la longueur de découplage est comprise entre 5 et 40% de la distance entre l'extrémité du retournement de la couche d'armature de carcasse et le point radialement le plus intérieur du cercle circonscrit à la tringle et de préférence comprise entre 15 et 35% de la distance entre l'extrémité du retournement de la couche d'armature de carcasse et le point radialement le plus intérieur du cercle circonscrit à la tringle.

De préférence selon l'invention, le retournement de la couche d'armature de carcasse et la partie principale de la couche d'armature de carcasse sont couplés sur une longueur comprise entre 25 et 40% de la distance entre l'extrémité du retournement de la couche d'armature de carcasse et le point radialement le plus intérieur du cercle circonscrit à la tringle.

Selon un mode préféré de réalisation de l'invention, dans tout plan méridien, sur une longueur du retournement de la couche d'armature de carcasse délimitée radialement entre l'extrémité dudit retournement de la couche d'armature de carcasse et un point situé à une distance du point radialement le plus intérieur du cercle circonscrit à la tringle égale à 65% de la distance entre l'extrémité du retournement de la couche d'armature de carcasse et le point radialement le plus intérieur du cercle circonscrit à la tringle, tout point du retournement de la couche d'armature de carcasse est à une distance de la surface extérieure du pneumatique inférieure à 10 mm. De préférence encore, tout point du retournement de la couche d'armature de carcasse est à une distance de la surface extérieure du pneumatique inférieure à 10 mm sur une longueur du retournement de la couche d'armature de carcasse délimitée radialement entre l'extrémité dudit retournement et un point situé à une distance du point radialement le plus intérieur du cercle circonscrit à la tringle égale à 50% de la distance entre l'extrémité du retournement de la couche d'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement de la couche d'armature de carcasse à l'extrémité du retournement de la couche d'armature de carcasse, de la quatrième couche de mélange polymérique formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement de la couche d'armature de carcasse à l'extrémité du retournement de la couche d'armature de carcasse, de la quatrième couche de mélange polymérique formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange polymérique ainsi réalisée selon l'invention semble permettre de contribuer au meilleur positionnement de la première couche de mélange polymérique et à sa mise en place pour assurer le couplage et éventuellement le découplage de la partie principale de la couche d'armature de carcasse et du retournement de la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allègement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes.

Avantageusement selon l'invention, les éléments de renforcement métalliques de la couche de l'armature de carcasse sont des câbles non frettés présentant au test dit de perméabilité un débit inférieur à 20 cm³/mn.

Avantageusement encore selon l'invention, les éléments de renforcement métalliques de la couche de l'armature de carcasse sont des câbles à au moins deux couches, au moins une couche interne étant gainée d'une couche constituée d'une composition de caoutchouc non réticulable, réticulable ou réticulée, de préférence à base d'au moins un élastomère diénique.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

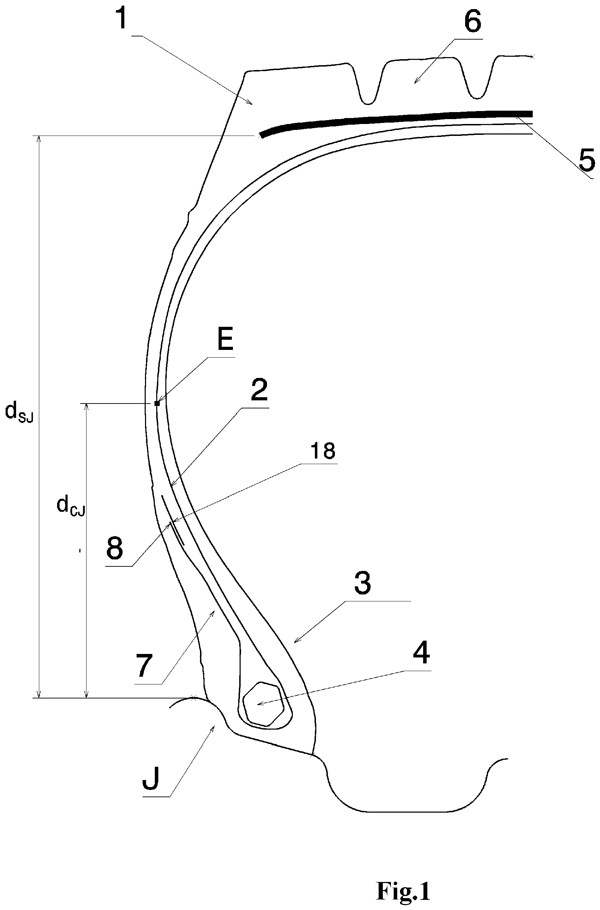

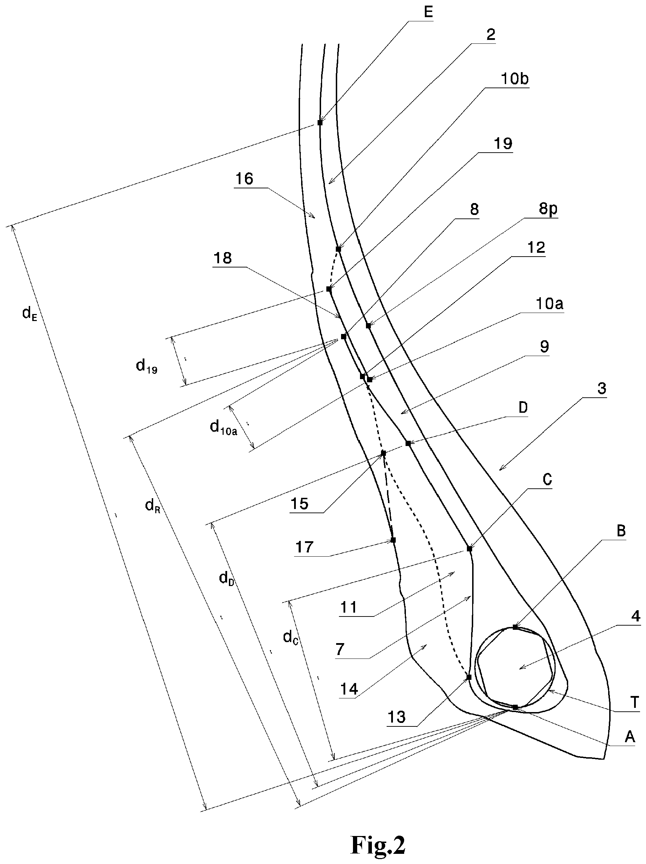

D'autres détails et caractéristiques avantageux de l'invention ressortiront ci-après de la description des exemples de réalisation de l'invention notamment en référence aux figures 1 et 2 qui représentent :
- figure 1, une vue méridienne d'un schéma d'un pneumatique selon un mode de réalisation de l'invention,
- figure 2, une représentation schématique agrandie de la zone du bourrelet du pneumatique de la figure 1.

Les figures ne sont pas représentées à l'échelle pour en simplifier la compréhension.

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

La figure 1 illustre encore une couche d'éléments de renforcement textiles 18 axialement intérieure au retournement de la couche d'armature de carcasse, dans sa partie axialement au contact du retournement de la couche d'armature de carcasse.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance d_{E} entre le point E et le point A est égale à 128 mm.

La distance d_{R} entre le point 8 et le point A est égale à 90 mm.

Le ratio de la distance d_{R} sur la distance d_{E} est égal à 70 % et donc compris entre 45 et 90%.

La distance radiale d_{CJ} entre le point axialement le plus extérieur de la partie principale de la couche d'armature de carcasse et le point radialement le plus extérieur de la jante nominale est égale à 108.2 mm.

La distance radiale d_{SJ} entre l'extrémité axialement extérieure de la couche d'éléments de renforcement de l'armature sommet axialement la plus large et le point radialement le plus extérieur de la jante nominale est égale à 206.7 mm.

Le ratio de la distance d_{CJ} sur la distance d_{SJ} est égal à 52,3 % et donc inférieur à 53 %.

Le retournement 7 de la couche d'armature de carcasse vient se coupler à la partie principale de la couche d'armature de carcasse 2 à partir du point C, tel que la distance de entre le point C et le point A est égale à 37 mm.

Le ratio de la distance de sur la distance d_{R} est égal à 41% et donc compris entre 30 et 55%.

Le retournement 7 de la couche d'armature de carcasse est ensuite découplé de la partie principale de la couche d'armature de carcasse 2 à partir du point D, tel que la distance d_{D} entre le point D et le point A est égale à 66 mm et telle que la longueur de couplage entre le point C et le point D est égale à 29 mm et donc comprise entre 25 et 40 % de la distance d_{R}. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse 2, est sensiblement constante et égale à 2.9 mm.

La longueur de découplage entre le point D et le point 8 est égale à 21 mm et donc comprise entre 15 et 35 % de la distance d_{R}. La longueur de découplage est mesurée selon la droite passant par les points D et 8.

Le retournement 7 de la couche d'armature de carcasse 2 est séparé de la partie principale de la couche d'armature de carcasse 2 par une première couche de mélange polymérique 9, présentant une extrémité radialement extérieure 10a au contact du retournement 7 de la couche d'armature de carcasse 2, radialement intérieure à l'extrémité 8 dudit retournement 7 à une distance d₁₀ₐ de ladite extrémité 8. La première couche de mélange polymérique 9, présente encore une extrémité radialement extérieure 10b au contact de la partie principale de la couche d'armature de carcasse 2. La première couche de mélange polymérique 9 présente un module d'élasticité sous tension à 10 % d'allongement inférieur au module d'élasticité sous tension à 10 % d'allongement des couches de calandrage de l'armature de carcasse 2.

La première couche de mélange polymérique 9 est profilée pour venir en appui sur la tringle 4 et assurer le couplage et découplage entre le retournement 7 de la couche d'armature de carcasse et la partie principale de la couche d'armature de carcasse 2.

Axialement intercalée entre l'extrémité 8 du retournement 7 de la couche d'armature de carcasse 2, est disposée une couche d'éléments de renforcement textiles 18 qui s'étend radialement entre le point 10a jusque son extrémité radialement la plus extérieure 19 de sorte que la distance d₁₉ entre l'extrémité 8 du retournement 7 de la couche d'armature de carcasse 2 et l'extrémité 19 de ladite couche 18 est sensiblement identique à la distance d₁₀ₐ.

La couche 18 est constituée d'éléments de renforcement en nylon de formule 94/2 460/460 répartis selon un pas égal à 2.5 mm. Le diamètre des câbles est égal à 0.54 mm. Les couches de calandrage de la couche 18 sont constituées du même mélange polymérique que les couches de calandrage de la couche d'armature de carcasse.

Selon cette représentation de l'invention, le pneumatique comporte une couche d'éléments de renforcement textiles 18 axialement disposée entre la partie principale de la couche d'armature de carcasse 2 et son retournement 7. Elle pourrait selon un autre mode de réalisation être disposée au contact du retournement 7 de la couche d'armature de carcasse 2 et axialement à l'extérieur dudit retournement 7. Le pneumatique pourrait encore comporter deux couches d'éléments de renforcement textiles axialement de part et d'autre du retournement 7 de la couche d'armature de carcasse 2.

Selon d'autres modes de réalisation de l'invention, la première couche 9 de mélange polymérique peut être radialement prolongée vers l'extérieur par une couche de mélange polymérique présentant des propriétés physico-chimiques différentes. L'extrémité radialement la plus extérieure 10b de la première couche 9 est alors avantageusement radialement intérieure à la projection orthogonale 8p du point 8 sur la partie principale de la couche d'armature de carcasse.

Axialement à l'extérieur du retournement 7 de la couche d'armature de carcasse est représentée la deuxième couche de mélange polymérique 11 dont l'extrémité radialement extérieure 12 est radialement à l'intérieure de l'extrémité 8 du retournement 7 de la couche d'armature de carcasse. L'extrémité radialement intérieure 13 de la deuxième couche de mélange polymérique 11 est radialement comprise entre les points A et B, respectivement radialement le plus intérieur et radialement le plus extérieur du cercle circonscrit à la tringle.

La deuxième couche de mélange polymérique 11 présente un module d'élasticité sous tension à 10 % d'allongement égal à 12.5 MPa et donc supérieur au module d'élasticité sous tension à 10 % d'allongement des couches de calandrage de l'armature de carcasse 2.

Au contact de la deuxième couche de mélange polymérique 11 et radialement sous la tringle, on trouve la troisième couche de mélange polymérique 14, dont l'extrémité axialement la plus extérieure 15 est radialement à l'intérieur de l'extrémité 12 de la deuxième couche de mélange polymérique 11.

La troisième couche de mélange polymérique 14 présente un module d'élasticité sous tension à 10 % d'allongement égal à 7.1 MPa.

Axialement au contact de la première couche de mélange polymérique 9, de la deuxième couche de mélange polymérique 11, et de la troisième couche de mélange polymérique 14, se trouve la quatrième couche de mélange polymérique 16. L'extrémité 17 radialement intérieure de la quatrième couche de mélange polymérique 16 est radialement intérieure à l'extrémité 15 de la troisième couche de mélange polymérique 14.

La quatrième couche de mélange polymérique 16 présente un module d'élasticité sous tension à 10 % d'allongement égal à 3.1 MPa.

Dans des zones situées de part et d'autre de l'extrémité 8 du retournement 7 de la couche d'armature de carcasse, le profil de la quatrième couche de mélange polymérique 16 est tel que ladite quatrième couche de mélange polymérique 16 présente une épaisseur, mesurée selon la direction normale aux éléments de renforcement de l'armature de carcasse 2 à l'extrémité 8 du retournement 7, sensiblement constante et égale à 3.3 mm, sur deux longueurs radiales d'environ 5 mm à partir de chacun des deux points situés de part et d'autre de l'extrémité 8 à des distances de la dite extrémité 8 égales à 2.5 mm correspondant à plus de 2.5 fois le diamètre des câbles d'armature de carcasse, celui-ci étant égal à 0.9 mm.

Des essais ont été réalisés avec des pneumatiques I réalisés selon l'invention conformément à la représentation des figures 1 et 2 et d'autres avec des pneumatiques R1 et R2 dits de référence.

Les pneumatiques de référence R1 diffèrent des pneumatiques selon l'invention par la présence de raidisseurs et une zone du bourrelet plus usuelle avec notamment une distance entre l'extrémité du retournement de la couche d'armature de carcasse et le point radialement le plus intérieur du cercle circonscrit à la tringle égale à 37% de la distance entre le point axialement le plus extérieur de la partie principale de la couche d'armature de carcasse et le point radialement le plus intérieur du cercle circonscrit à la tringle et des couches de mélanges polymériques entre la partie principale de la couche d'armature de carcasse et son retournement ainsi que de chaque côté du raidisseur.

Les pneumatiques de référence R2 diffèrent des pneumatiques selon l'invention par l'absence de la couche d'éléments de renforcement textiles 18.

Des essais d'endurance ont été réalisés en faisant rouler deux pneus rabotés l'un sur l'autre avec une pression régulée de 8b, avec un gonflage à l'azote et une charge de 6786 daN à une vitesse de 30km/h.

Les essais ont été réalisés pour les pneumatiques selon l'invention avec des conditions identiques à celles appliquées aux pneumatiques de référence.

Les essais réalisés conduisent pour les pneumatiques de référence R1 à des performances établissant la base 100. Les tests sont arrêtés lors de l'apparition d'une dégradation de la zone basse du pneumatique.

La performance du pneumatique est le nombre de kilomètres parcourus. Les résultats des mesures sont présentés dans le tableau suivant. Ils sont exprimés en distance relative, une valeur de 100 étant attribuée au pneumatique R1.

| | Pneumatique R1 | Pneumatique R2 | Pneumatique I |
|---|---|---|---|
| MA₁₀ (MPa) calandrage Carcasse | 9.8 | 9.8 | 9.8 |
| MA₁₀ (MPa) calandrage couche 18 | 9.8 | 9.8 | 9.8 |
| MA₁₀ (MPa) première couche | 3.7 | 9.8 | 9.8 |
| d₁₀ₐ (mm) | - | - | 13 |
| d₁₉ (mm) | | | 13 |
| Masse (kg) | 63.9 | 61.1 | 61.1 |
| Performance | 100 | 250 | 260 |

Ces premiers résultats mettent en évidence que les pneumatiques selon l'invention autorisent un compromis entre des performances d'endurance supérieures aux pneumatiques d'architecture plus usuelle telle que le pneumatique R1 et la masse du pneumatique.

D'autres essais d'endurance ont été réalisés en faisant rouler deux pneus rabotés l'un sur l'autre avec une pression régulée de 11b, avec un gonflage à l'azote et une charge de 9434 daN à une vitesse de 30km/h.

| | Pneumatique R1 | Pneumatique R2 | Pneumatique I |
|---|---|---|---|
| Performance | 100 | 190 | 215 |

Les résultats obtenus avec les pneumatiques selon l'invention mettent en évidence que leur conception permet de diminuer la propagation des fissures autour du point 8 et autorisent une meilleure performance en termes d'endurance de ces pneumatiques lors de roulage dans des conditions extrêmes.

## Revendications

1. - Pneumatique (1), destiné à être monté sur une jante creuse de type « 15 ° drop centre », comprenant une armature de carcasse radiale (2), constituée d'une unique couche d'armature de carcasse formée d'éléments de renforcement insérés entre deux couches de calandrage de mélange polymérique, ledit pneumatique comprenant une armature de sommet (5), elle-même coiffée radialement d'une bande de roulement (6), ladite bande de roulement étant réunie à deux bourrelets (3) par l'intermédiaire de deux flancs, la couche d'éléments de renforcement de l'armature de carcasse étant ancrée dans chacun des bourrelets par retournement autour d'une tringle (4) pour former une partie principale de la couche d'armature de carcasse s'étendant d'une tringle à l'autre et un retournement (7) de la couche d'armature de carcasse dans chacun des bourrelets, ledit retournement de la couche d'armature de carcasse étant séparé de la partie principale de la couche d'armature de carcasse par une première couche de mélange polymérique (9) s'étendant radialement depuis la tringle axialement entre la partie principale de la couche d'armature de carcasse et le retournement (7) de la couche d'armature de carcasse et ledit retournement (7) de la couche d'armature de carcasse étant axialement vers l'extérieur au contact d'une deuxième couche de mélange polymérique (11), elle-même au moins au contact d'une troisième couche de mélange polymérique (14) formant la surface extérieure du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche de mélange polymérique (16) formant la surface extérieure d'un flanc,
dans une coupe méridienne dudit pneumatique:
- la distance (d_{R}) entre l'extrémité (8) du retournement (7) de la couche d'armature de carcasse et le point radialement le plus intérieur (A) du cercle (T) circonscrit à la tringle (4) est comprise entre 45 et 90% de la distance (d_{E}) entre le point (E) axialement le plus extérieur de la partie principale de la couche d'armature de carcasse (2) et le point radialement le plus intérieur (A) du cercle (T) circonscrit à la tringle,
- radialement vers l'extérieur, à partir d'un point (C) du retournement (7) de la couche d'armature de carcasse situé à une distance de du point (A) radialement le plus intérieur du cercle (T) circonscrit à la tringle comprise entre 30 et 55% de la distance (d_{R}) entre l'extrémité (8) du retournement (7) de la couche d'armature de carcasse et le point (A) radialement le plus intérieur du cercle (T) circonscrit à la tringle,
- le retournement (7) de la couche d'armature de carcasse et la partie principale de la couche d'armature de carcasse (2) sont couplés, ce qui signifie que les éléments de renforcement respectifs de la partie principale de la couche d'armature de carcasse (2) et du retournement (7) de la couche d'armature de carcasse sont séparés par une épaisseur de mélange caoutchouteux sensiblement constante et d'au plus 5 mm sur une longueur supérieure à 15 % de la distance (d_{R}) entre l'extrémité (8) du retournement (7) de la couche d'armature de carcasse et le point (A) radialement le plus intérieur du cercle (T) circonscrit à la tringle, et- le retournement (7) de la couche d'armature de carcasse et la partie principale de la couche d'armature de carcasse (2) sont les seules couches d'éléments de renforcement dont l'allongement à rupture est inférieur à 6 % présentes dans une zone du flanc constituant au moins 90% de la surface du flanc comprise radialement entre l'extrémité (8) du retournement (7) de la couche d'armature de carcasse et le point (B) radialement le plus extérieur de la tringle (4);
**caractérisé en ce que,**
dans une coupe méridienne dudit pneumatique,
- au moins une couche d'éléments de renforcement textiles (18) orientés radialement est axialement au contact de l'extrémité (8) du retournement (7) de la couche d'armature de carcasse,
- ladite au moins une couche d'éléments de renforcement textiles (18) s'étend radialement intérieurement au contact du retournement (7) de la couche d'armature de carcasse sur au moins 8 mm,
- ladite au moins une couche d'éléments de renforcement textiles (18) s'étend radialement extérieurement au-delà de l'extrémité (8) du retournement (7) de la couche d'armature de carcasse sur au moins 8 mm.

2. - Pneumatique (1) selon la revendication 1, **caractérisé en ce que,** dans sa partie axialement au contact du retournement (7) de la couche d'armature de carcasse, ladite au moins une couche d'éléments de renforcement textiles (18) est axialement extérieure au retournement (7) de la couche d'armature de carcasse.

3. - Pneumatique selon la revendication 1 ou 2, **caractérisé en ce que,** dans sa partie axialement au contact du retournement (7) de la couche d'armature de carcasse, ladite au moins une couche d'éléments de renforcement textiles (18) est axialement intérieure au retournement (7) de la couche d'armature de carcasse.

4. - Pneumatique (1) selon l'une des revendications 1 à 3, **caractérisé en ce que** le diamètre des éléments de renforcement textiles est inférieur à 0.65 mm.

5. - Pneumatique (1) selon l'une des revendications 1 à 4, **caractérisé en ce que** la densité d'éléments de renforcement textiles est comprise entre 33 et 104 éléments de renforcement textiles par décimètre.

6. - Pneumatique (1) selon l'une des revendications précédentes, **caractérisé en ce que** le module d'élasticité sous tension à 10 % d'allongement de la deuxième couche de mélange polymérique (11) est supérieur ou égal au module d'élasticité sous tension à 10 % d'allongement du calandrage de la couche d'armature de carcasse (2) et strictement inférieur à 25 MPa.

7. - Pneumatique (1) selon l'une des revendications précédentes, **caractérisé en ce que** l'extrémité (8) du retournement de la couche d'armature de carcasse est radialement extérieure à l'extrémité (8) radialement extérieure de la deuxième couche de mélange polymérique (11).

8. - Pneumatique (1) selon l'une des revendications précédentes, **caractérisé en ce que** le module d'élasticité sous tension à 10 % d'allongement des couches de calandrage de la couche d'armature de carcasse (2) est compris entre 4 et 16 MPa et de préférence entre 8 et 12 MPa.

9. - Pneumatique (1) selon l'une des revendications précédentes, les couches d'éléments de renforcement textiles (18) étant constituées d'éléments de renforcement textiles insérés entre deux couches de calandrage, **caractérisé en ce que** le module d'élasticité sous tension à 10 % d'allongement des couches de calandrage de ladite au moins une couche d'éléments de renforcement textiles (18) est compris entre 80 % et 110 % du module d'élasticité sous tension à 10 % d'allongement du calandrage de la couche d'armature de carcasse (2).

10. - Pneumatique (1) selon l'une des revendications précédentes, **caractérisé en ce que** le module d'élasticité sous tension à 10 % d'allongement de la première couche de mélange polymérique est inférieur ou égal au module d'élasticité sous tension à 10 % d'allongement du calandrage de la couche d'armature de carcasse (2).

11. - Pneumatique (1) selon l'une des revendications précédentes, **caractérisé en ce que** le module d'élasticité sous tension à 10 % d'allongement de la première couche de mélange polymérique (9) est supérieur à 50% du module d'élasticité sous tension à 10 % d'allongement du calandrage de la couche d'armature de carcasse (2) et de préférence est supérieur à 70% du module d'élasticité sous tension à 10 % d'allongement du calandrage de la couche d'armature de carcasse (2).

12. - Pneumatique (1) selon l'une des revendications 3 à 11, les couches d'éléments de renforcement textiles (18) étant constituées d'éléments de renforcement textiles insérés entre deux couches de calandrage, **caractérisé en ce que** le module d'élasticité sous tension à 10 % d'allongement des couches de calandrage de ladite au moins une couche d'éléments de renforcement textiles (18) est supérieure au module d'élasticité sous tension à 10 % d'allongement de la première couche de mélange polymérique (9).

13. - Pneumatique (1) selon l'une des revendications précédentes, **caractérisé en ce que** radialement vers l'extérieur à partir dudit point C du retournement (7) de la couche d'armature de carcasse, le retournement (7) de la couche d'armature de carcasse et la partie principale de la couche d'armature de carcasse sont couplés sur une longueur comprise entre 15 et 65% de la distance d_{R} entre l'extrémité (8) du retournement (7) de la couche d'armature de carcasse et le point (A) radialement le plus intérieur du cercle (C) circonscrit à la tringle, pour être ensuite découplés par la première couche de mélange polymérique (9) jusqu'à l'extrémité (8) du retournement (7) de la couche d'armature de carcasse.

14. - Pneumatique (1) selon la revendication 12, **caractérisé en ce que** la longueur de découplage est comprise entre 5 et 40 % de la distance d_{R} entre l'extrémité (8) du retournement (7) de la couche d'armature de carcasse et le point (A) radialement le plus intérieur du cercle circonscrit à la tringle et de préférence comprise entre 15 et 35 % de la distance d_{R} entre l'extrémité (8) du retournement (7) de la couche d'armature de carcasse et le point (A) radialement le plus intérieur du cercle (C) circonscrit à la tringle (4).

15. - Pneumatique (1) selon l'une des revendications précédentes, **caractérisé en ce que** le retournement (7) de la couche d'armature de carcasse et la partie principale de la couche d'armature de carcasse (2) sont couplés sur une longueur comprise entre 25 et 40% de la distance d_{R} entre l'extrémité (8) du retournement (7) de la couche d'armature de carcasse et le point (A) radialement le plus intérieur du cercle (C) circonscrit à la tringle (4).

## Patentansprüche

1. Luftreifen (1), dazu bestimmt, auf eine Tiefbettfelge des Typs "15" drop centre" montiert zu werden, der eine radiale Karkassenbewehrung (2) enthält, die aus einer einzigen Karkassenbewehrungsschicht besteht, die von zwischen zwei Kalandrierschichten aus Polymermischung eingefügten Verstärkungselementen gebildet wird, wobei der Luftreifen eine Scheitelbewehrung (5) enthält, die selbst radial von einem Laufstreifen (6) überdeckt wird, wobei der Laufstreifen mittels zweier Flanken mit zwei Wülsten (3) vereinigt wird, wobei die Schicht von Verstärkungselementen der Karkassenbewehrung in jedem der Wülste durch Umschlag um einen Wulstkern (4), um einen Hauptteil der Karkassenbewehrungsschicht zu bilden, der sich von einem Wulstkern zum anderen erstreckt, und einen Umschlag (7) der Karkassenbewehrungsschicht in jedem der Wülste verankert ist, wobei der Umschlag der Karkassenbewehrungsschicht vom Hauptteil der Karkassenbewehrungsschicht durch eine erste Schicht aus Polymermischung (9) getrennt ist, die sich radial vom Wulstkern axial zwischen dem Hauptteil der Karkassenbewehrungsschicht und dem Umschlag (7) der Karkassenbewehrungsschicht erstreckt, und der Umschlag (7) der Karkassenbewehrungsschicht axial nach außen mit einer zweiten Schicht aus Polymermischung (11) in Kontakt ist, die selbst mindestens mit einer dritten Schicht aus Polymermischung (14) in Kontakt ist, die die Außenfläche des Luftreifens im Bereich des Wulsts bildet, wobei die dritte Schicht aus Polymermischung insbesondere dazu bestimmt ist, mit der Felge in Kontakt zu kommen, wobei die dritte Schicht aus Polymermischung radial nach außen mit einer vierten Schicht aus Polymermischung (16) in Kontakt ist, die die Außenfläche einer Flanke bildet,
wobei in einem Meridianschnitt des Luftreifens:
- der Abstand (d_{R}) zwischen dem Ende (8) des Umschlags (7) der Karkassenbewehrungsschicht und dem radial am weitesten innen liegenden Punkt (A) des Umkreises (T) des Wulstkerns (4) zwischen 45 und 90% des Abstands (d_{E}) zwischen dem axial am weitesten außen liegenden Punkt (E) des Hauptteils der Karkassenbewehrungsschicht (2) und dem radial am weitesten innen liegenden Punkt (A) des Umkreises (T) des Wulstkerns liegt,
- radial nach außen ausgehend von einem Punkt (C) des Umschlags (7) der Karkassenbewehrungsschicht, der sich in einem Abstand vom radial am weitesten innen liegenden Punkt (A) des Umkreises (T) des Wulstkerns befindet, der zwischen 30 und 55% des Abstands (d_{R}) zwischen dem Ende (8) des Umschlags (7) der Karkassenbewehrungsschicht und dem radial am weitesten innen liegenden Punkt (A) des Umkreises (T) des Wulstkerns liegt,
- der Umschlag (7) der Karkassenbewehrungsschicht und der Hauptteil der Karkassenbewehrungsschicht (2) gekoppelt sind, was bedeutet, dass die jeweiligen Verstärkungselemente des Hauptteils der Karkassenbewehrungsschicht (2) und des Umschlags (7) der Karkassenbewehrungsschicht durch eine im Wesentlichen konstante und höchstens 5 mm betragende Kautschukmischungsdicke über eine Länge von mehr als 15% des Abstands (d_{R}) zwischen dem Ende (8) des Umschlags (7) der Karkassenbewehrungsschicht und dem radial am weitesten innen liegenden Punkt (A) des Umkreises (T) des Wulstkerns getrennt sind, und- der Umschlag (7) der Karkassenbewehrungsschicht und der Hauptteil der Karkassenbewehrungsschicht (2) die einzigen Schichten von Verstärkungselementen sind, deren Bruchdehnung unter 6% liegt, die in einem Bereich der Flanke vorhanden sind, der mindestens 90% der Fläche der Flanke bildet, die radial zwischen dem Ende (8) des Umschlags (7) der Karkassenbewehrungsschicht und dem radial am weitesten außen liegenden Punkt (B) des Wulstkerns (4) liegt;
**dadurch gekennzeichnet, dass** in einem Meridianschnitt des Luftreifens
- mindestens eine Schicht von radial ausgerichteten textilen Verstärkungselementen (18) axial mit dem Ende (8) des Umschlags (7) der Karkassenbewehrungsschicht in Kontakt ist,
- die mindestens eine Schicht von textilen Verstärkungselementen (18) sich radial innen über mindestens 8 mm in Kontakt mit dem Umschlag (7) der Karkassenbewehrungsschicht erstreckt,
- die mindestens eine Schicht von textilen Verstärkungselementen (18) sich radial außen über mindestens 8 mm jenseits des Endes (8) des Umschlags (7) der Karkassenbewehrungsschicht erstreckt.

2. Luftreifen (1) nach Anspruch 1, **dadurch gekennzeichnet, dass** die mindestens eine Schicht von textilen Verstärkungselementen (18) sich in ihrem axial mit dem Umschlag (7) der Karkassenbewehrungsschicht in Kontakt befindlichen Teil axial außen bezüglich des Umschlags (7) der Karkassenbewehrungsschicht befindet.

3. Luftreifen nach Anspruch 1 oder 2, **dadurch gekennzeichnet, dass** die mindestens eine Schicht von textilen Verstärkungselementen (18) sich in ihrem axial mit dem Umschlag (7) der Karkassenbewehrungsschicht in Kontakt befindlichen Teil axial innen bezüglich des Umschlags (7) der Karkassenbewehrungsschicht befindet.

4. Luftreifen (1) nach einem der Ansprüche 1 bis 3, **dadurch gekennzeichnet, dass** der Durchmesser der textilen Verstärkungselemente geringer ist als 0,65 mm.

5. Luftreifen (1) nach einem der Ansprüche 1 bis 4, **dadurch gekennzeichnet, dass** die Dichte von textilen Verstärkungselementen zwischen 33 und 104 textilen Verstärkungselementen pro Dezimeter liegt.

6. Luftreifen (1) nach einem der vorhergehenden Ansprüche, **dadurch gekennzeichnet, dass** der Elastizitätsmodul unter Spannung bei 10% Dehnung der zweiten Schicht aus Polymermischung (11) höher als der oder gleich dem Elastizitätsmodul unter Spannung bei 10% Dehnung der Kalandrierung der Karkassenbewehrungsschicht (2) und strikt niedriger als 25 MPa ist.

7. Luftreifen (1) nach einem der vorhergehenden Ansprüche, **dadurch gekennzeichnet, dass** das Ende (8) des Umschlags der Karkassenbewehrungsschicht radial außen bezüglich des radial äußeren Endes (8) der zweiten Schicht aus Polymermischung (11) ist.

8. Luftreifen (1) nach einem der vorhergehenden Ansprüche, **dadurch gekennzeichnet, dass** der Elastizitätsmodul unter Spannung bei 10% Dehnung der Kalandrierschichten der Karkassenbewehrungsschicht (2) zwischen 4 und 16 MPa und vorzugsweise zwischen 8 und 12 MPa liegt.

9. Luftreifen (1) nach einem der vorhergehenden Ansprüche, wobei die Schichten von textilen Verstärkungselementen (18) aus Schichten von textilen Verstärkungselementen bestehen, die zwischen zwei Kalandrierschichten eingefügt sind, **dadurch gekennzeichnet, dass** der Elastizitätsmodul unter Spannung bei 10% Dehnung der Kalandrierschichten der mindestens einen Schicht von textilen Verstärkungselementen (18) zwischen 80% und 110% des Elastizitätsmoduls unter Spannung bei 10% Dehnung der Kalandrierung der Karkassenbewehrungsschicht (2) liegt.

10. Luftreifen (1) nach einem der vorhergehenden Ansprüche, **dadurch gekennzeichnet, dass** der Elastizitätsmodul unter Spannung bei 10% Dehnung der ersten Schicht aus Polymermischung niedriger als der oder gleich dem Elastizitätsmodul unter Spannung bei 10% Dehnung der Kalandrierung der Karkassenbewehrungsschicht (2) ist.

11. Luftreifen (1) nach einem der vorhergehenden Ansprüche, **dadurch gekennzeichnet, dass** der Elastizitätsmodul unter Spannung bei 10% Dehnung der ersten Schicht aus Polymermischung (9) höher ist als 50% des Elastizitätsmoduls unter Spannung bei 10% Dehnung der Kalandrierung der Karkassenbewehrungsschicht (2) und vorzugsweise höher als 70% des Elastizitätsmoduls unter Spannung bei 10% Dehnung der Kalandrierung der Karkassenbewehrungsschicht (2).

12. Luftreifen (1) nach einem der Ansprüche 3 bis 11, wobei die Schichten von textilen Verstärkungselementen (18) aus textilen Verstärkungselementen bestehen, die zwischen zwei Kalandrierschichten eingefügt sind, **dadurch gekennzeichnet, dass** der Elastizitätsmodul unter Spannung bei 10% Dehnung der Kalandrierschichten der mindestens einen Schicht von textilen Verstärkungselementen (18) höher ist als der Elastizitätsmodul unter Spannung bei 10% Dehnung der ersten Schicht aus Polymermischung (9).

13. Luftreifen (1) nach einem der vorhergehenden Ansprüche, **dadurch gekennzeichnet, dass** ausgehend vom Punkt C des Umschlags (7) der Karkassenbewehrungsschicht radial nach außen der Umschlag (7) der Karkassenbewehrungsschicht und der Hauptteil der Karkassenbewehrungsschicht über eine Länge zwischen 15 und 65% des Abstand d_{R} zwischen dem Ende (8) des Umschlags (7) der Karkassenbewehrungsschicht und dem radial am weitesten innen liegenden Punkt (A) des Umkreises (C) des Wulstkerns gekoppelt sind, um anschließend durch die erste Schicht aus Polymermischung (9) bis zum Ende (8) des Umschlags (7) der Karkassenbewehrungsschicht entkoppelt zu sein.

14. Luftreifen (1) nach Anspruch 12, **dadurch gekennzeichnet, dass** die Entkopplungslänge zwischen 5 und 40% des Abstands d_{R} zwischen dem Ende (8) des Umschlags (7) der Karkassenbewehrungsschicht und dem radial am weitesten innen liegenden Punkt (A) des Umkreises des Wulstkerns liegt und vorzugsweise zwischen 15 und 35% des Abstands d_{R} zwischen dem Ende (8) des Umschlags (7) der Karkassenbewehrungsschicht und dem radial am weitesten innen liegenden Punkt (A) des Umkreises (C) des Wulstkerns (4) liegt.

15. Luftreifen (1) nach einem der vorhergehenden Ansprüche, **dadurch gekennzeichnet, dass** der Umschlag (7) der Karkassenbewehrungsschicht und der Hauptteil der Karkassenbewehrungsschicht (2) über eine Länge zwischen 25 und 40% des Abstands d_{R} zwischen dem Ende (8) des Umschlags (7) der Karkassenbewehrungsschicht und dem radial am weitesten innen liegenden Punkt (A) des Umkreises (C) des Wulstkerns (4) gekoppelt sind.

## Claims

1. **-** Tyre (1) intended to be fitted on a hollow rim of "15° drop centre type", comprising a radial carcass reinforcement (2), made up of a single carcass reinforcement layer formed by reinforcing elements inserted between two calendering layers of polymer compound, said tyre comprising a crown reinforcement (5), itself capped radially by a tread (6), said tread being connected to two beads (3) via two sidewalls, the layer of reinforcing elements of the carcass reinforcement being anchored in each of the beads by a turn-up around a bead wire (4) in order to form a main part of the carcass reinforcement layer extending from one bead wire to the other and a turn-up (7) of the carcass reinforcement layer in each of the beads, said turn-up of the carcass reinforcement layer being separated from the main part of the carcass reinforcement layer by a first layer of polymer compound (9) extending radially from the bead wire axially between the main part of the carcass reinforcement layer and the turn-up (7) of the carcass reinforcement layer and said turn-up of the carcass reinforcement layer being in contact, axially towards the outside, with a second layer of polymer compound (11), itself at least in contact with a third layer of polymer compound (14) forming the outer surface of the tyre in the bead region, said third layer of polymer compound being intended notably to come into contact with the rim, said third layer of polymer compound being in contact, radially towards the outside, with a fourth layer of polymer compound (16) forming the outer surface of a sidewall, in a meridian section of said tyre,
- the distance (d_{R}) between the end (8) of the turn-up (7) of the carcass reinforcement layer and the radially innermost point (A) of the circle (T) circumscribed on the bead wire is between 45 and 90% of the distance (d_{E}) between the axially outermost point (E) of the main part of the carcass reinforcement layer (2) and the radially innermost point (A) of the circle (T) circumscribed on the bead wire,
- radially towards the outside, starting from a point (C) of the turn-up (7) of the carcass reinforcement layer that is situated at a distance from the radially innermost point (A) of the circle (T) circumscribed on the bead wire of between 30 and 55% of the distance (d_{R}) between the end (8) of the turn-up (7) of the carcass reinforcement layer and the radially innermost point (A) of the circle (T) circumscribed on the bead wire, the turn-up (7) of the carcass reinforcement layer and the main part of the carcass reinforcement layer (2) are coupled, which means the respective reinforcing elements of the main part of the carcass reinforcement layer (2) and of the turn-up (7) of the carcass reinforcement layer are separated by a thickness of rubber compound that is substantially constant and at most 5 mm along a length greater than 15% of the distance (d_{R}) between the end (8) of the turn-up (7) of the carcass reinforcement layer and the radially innermost point (A) of the circle (T) circumscribed on the bead wire, and
- the turn-up (7) of the carcass reinforcement layer and the main part of the carcass reinforcement layer (2) are the only layers of reinforcing elements, of which the elongation at break is less than 6%, that are present in a sidewall region making up at least 90% of the surface area of the sidewall comprised radially between the end (8) of the turn-up (7) of the carcass reinforcement layer and the radially outermost point (B) of the bead wire(4),
**characterized in that,** in a meridian section of said tyre,
- at least one layer of radially oriented textile reinforcing elements (18) is axially in contact with the end (8) of the turn-up (7) of the carcass reinforcement layer,
- said at least one layer of textile reinforcing elements (18) extends radially on the inside in contact with the turn-up (7) of the carcass reinforcement layer over at least 8 mm,
- said at least one layer of textile reinforcing elements (18) extends radially on the outside beyond the end (8) of the turn-up (7) of the carcass reinforcement layer over at least 8 mm.

2. - Tyre (1) according to Claim 1, **characterized in that,** in its part axially in contact with the turn-up (7) of the carcass reinforcement layer, said at least one layer of textile reinforcing elements (18) is axially on the outside of the turn-up (7) of the carcass reinforcement layer.

3. - Tyre (1) according to Claim 1 or 2, **characterized in that,** in its part axially in contact with the turn-up (7) of the carcass reinforcement layer, said at least one layer of textile reinforcing elements (18) is axially on the inside of the turn-up (7) of the carcass reinforcement layer.

4. - Tyre (1) according to one of Claims 1 to 3, **characterized in that** the diameter of the textile reinforcing elements is less than 0.65 mm.

5. - Tyre (1) according to one of Claims 1 to 4, **characterized in that** the density of textile reinforcing elements is between 33 and 104 textile reinforcing elements per decimetre.

6. - Tyre (1) according to one of the preceding claims, **characterized in that** the tensile elastic modulus at 10% elongation of the second layer of polymer compound (11) is greater than or equal to the tensile elastic modulus at 10% elongation of the calendering of the carcass reinforcement layer and strictly less than 25 MPa.

7. - Tyre (1) according to one of the preceding claims, **characterized in that** the end (8) of the turn-up (7) of the carcass reinforcement layer is radially on the outside of the radially outer end of the second layer of polymer compound (11).

8. - Tyre (1) according to one of the preceding claims, **characterized in that** the tensile elastic modulus at 10% elongation of the calendering layers of the carcass reinforcement layer (2) is between 4 and 16 MPa and preferably between 8 and 12 MPa.

9. - Tyre (1) according to one of the preceding claims, the layers of textile reinforcing elements (18) being formed by textile reinforcing elements inserted between two calendering layers, **characterized in that** the tensile elastic modulus at 10% elongation of the calendering layers of said at least one layer of textile reinforcing elements (18) is between 80% and 110% of the tensile elastic modulus at 10% elongation of the calendering of the carcass reinforcement layer.

10. - Tyre (1) according to one of the preceding claims, **characterized in that** the tensile elastic modulus at 10% elongation of the first layer of polymer compound is less than or equal to the tensile elastic modulus at 10% elongation of the calendering of the carcass reinforcement layer (2).

11. - Tyre (1) according to one of the preceding claims, **characterized in that** the tensile elastic modulus at 10% elongation of the first layer of polymer compound (9) is greater than 50% of the tensile elastic modulus at 10% elongation of the calendering of the carcass reinforcement layer (2) and preferably is greater than 70% of the tensile elastic modulus at 10% elongation of the calendering of the carcass reinforcement layer (2).

12. - Tyre (1) according to one of Claims 3 to 11, the layers of textile reinforcing elements (18) being formed by textile reinforcing elements inserted between two calendering layers, **characterized in that** the tensile elastic modulus at 10% elongation of the calendering layers of said at least one layer of textile reinforcing elements (18) is greater than the tensile elastic modulus at 10% elongation of the first layer of polymer compound.

13. - Tyre (1) according to one of the preceding claims, **characterized in that** radially towards the outside, starting from said point C of the turn-up (7) of the carcass reinforcement layer, the turn-up (7) of the carcass reinforcement layer and the main part of the carcass reinforcement layer are coupled along a length of between 15 and 65% of the distance (d_{R}) between the end (8) of the turn-up (7) of the carcass reinforcement layer and the radially innermost point (A) of the circle (T) circumscribed on the bead wire, and are then decoupled by the first layer of polymer compound (9) as far as the end (8) of the turn-up (7) of the carcass reinforcement layer.

14. - Tyre (1) according to Claim 12, **characterized in that** the decoupling length is between 5 and 40% of the distance between the end (8) of the turn-up (7) of the carcass reinforcement layer and the radially innermost point (A) of the circle circumscribed on the bead wire and is preferably between 15 and 35% of the distance between the end (8) of the turn-up (7) of the carcass reinforcement layer and the radially innermost point (A) of the circle (T) circumscribed on the bead wire.

15. - Tyre (1) according to one of the preceding claims, **characterized in that** the turn-up (7) of the carcass reinforcement layer and the main part of the carcass reinforcement layer (2) are coupled along a length of between 25 and 40% of the distance (d_{R}) between the end (8) of the turn-up (7) of the carcass reinforcement layer and the radially innermost point (A) of the circle (T) circumscribed on the bead wire (4).
